# EUROPEAN PATENT SPECIFICATION

(11) **EP 3 855 007 B1**
(45) Date of publication and mention of the grant of the patent: **23.08.2023**
(21) Application number: 19869018.2
(22) Date of filing: 27.09.2019
(51) Int. Cl.: F02D 9/10, B62J 99/00, F02D 11/10

(54) **STRADDLED VEHICLE**
SATTELFAHRZEUG
VÉHICULE DU TYPE À SELLE

(30) Priority: 03.10.2018 JP 2018188232
(43) Date of publication of application: 28.07.2021
(73) Proprietor: YAMAHA HATSUDOKI KABUSHIKI KAISHA, Iwata-shi Shizuoka 438-8501 (JP)
(72) Inventor: IMAMURA, Kosuke, 2500 Shizuoka (JP); SASAE, Koichi, 2500 Shizuoka (JP)
(74) Representative: Stöckeler, Ferdinand
(86) International application number: PCT/JP2019/038412
(87) International publication number: WO 2020/071295

(56) References cited:
- EP-A1- 3 244 041
- JP-A- 2009 197 812
- JP-A- 2009 197 812
- JP-A- 2011 149 278
- JP-A- 2012 159 052
- JP-B2- 5 184 503
- US-A1- 2014 261 307
- US-A1- 2018 094 601

## Description

### Technical field

The present teaching relates to a straddled vehicle.

### Background

Straddled vehicles such as the one disclosed in Patent Document 1 are well-known. The straddled vehicle disclosed in Patent Document 1 comprises an engine and a throttle device.

The engine is a single-cylinder engine. The throttle device is arranged at the center in the left-right direction of the vehicle. The throttle device includes a throttle body, a throttle valve, and a throttle valve drive motor. The throttle body forms an intake passage. The throttle valve can rotate about a rotation axis. This allows the throttle valve to open and close the intake passage. The throttle valve drive motor generates driving force for rotating the throttle valve. Well thought out layouts of the throttle valve drive motor in the throttle devices of a straddled vehicle have suppressed increase in size of the structure in the vicinity of the intake passage of the engine.

### Citation List

### [Patent document]

[Patent Document 1] Japanese Patent No. 5184503

### Summary of the Teaching

### Problem to be solved

The inventors of the present teaching, however, have found some cases where even such well thought out layouts of the throttle valve drive motor could fail to suppress increase in size of the structure in the vicinity of the intake passage.

Accordingly, it is an objective of the present teaching to provide a straddled vehicle comprising a throttle body that can suppress size increase in the vicinity of the intake passage.

### Solutions to the problems

A straddled vehicle (1) comprising:
a vehicle body frame;
an engine supported by the vehicle body frame, the engine being a single-cylinder engine having a single combustion chamber; and,
a throttle device;
wherein the throttle device includes:
   a throttle body forming a part of an intake passage connected to the single combustion chamber;
   a single throttle valve for regulating an amount of air flowing into the combustion chamber by rotating about a throttle valve rotation axis extending, from the throttle device's perspective, in the left-right direction;
   a throttle valve drive motor including a throttle valve drive motor rotation shaft having a center axis, which is a rotation axis of the throttle valve drive motor extending in the left-right direction from the throttle device's perspective, the throttle valve drive motor rotating the throttle valve drive motor rotation shaft about the rotation axis of the throttle valve drive motor; and,
   a speed reduction mechanism including:
      a plurality of gears including only spur gears and/or helical gears; and,
      a speed reduction mechanism case housing the plurality of gears and supporting the throttle valve drive motor;
         wherein the speed reduction mechanism rotates the throttle valve about the throttle valve rotation axis by transmitting rotation of the throttle valve drive motor rotation shaft while reducing the rotation speed through the plurality of gears,
wherein the throttle device satisfies (A), (B), (C), (D), and (E):
   (A) the throttle valve is arranged right of the speed reduction mechanism, the right being in the perspective of the throttle device;
   (B) the throttle valve drive motor is arranged left of the speed reduction mechanism, the left being in the perspective of the throttle device;
   (C) the throttle valve drive motor is within an outer edge of the speed reduction mechanism case when viewed in the left direction from the throttle device's perspective or in the right direction from the throttle device's perspective;
   (D) moving range of the throttle valve is within the outer edge of the speed reduction mechanism case when viewed in the left direction from the throttle device's perspective or in the right direction from the throttle device's perspective;
   (E) the throttle valve rotation axis is arranged at a position different from the throttle valve drive motor rotation axis when viewed in the left direction from the throttle device's perspective or in the right direction from the throttle device's perspective, wherein the throttle valve drive motor (106) can be arranged at any position up, down, at the front, or at the back of the throttle valve (102) when viewed in the left direction from the throttle device's perspective or the right direction from the throttle device's perspective.

The straddled vehicle (1) can suppress size increase in the vicinity of the intake passage. More specifically, the throttle valve is arranged right of the speed reduction mechanism, wherein the right is in the perspective of the throttle device. In addition, the throttle valve drive motor is arranged left of the speed reduction mechanism, wherein the left is in the perspective of the throttle device. As a result, the intake passage can't intervene with the throttle valve drive motor. Thus, when viewed in the left direction from the throttle device's perspective or in the right direction from the throttle device's perspective, the throttle valve drive motor can be arranged so as to overlap the intake passage, or the throttle valve drive motor can be arranged up of the intake passage, wherein the up is in the perspective of the throttle device, or the throttle valve drive motor can be arranged down of the intake passage, wherein the down is in the perspective of the throttle device. Consequently, the straddled vehicle (1) has high flexibility in arrangements of the throttle valve drive motor. Such high flexibility in arrangements of the throttle valve drive motor allows the throttle valve drive motor to be arranged at a position suitable for suppressing size increase in the vicinity of the intake passage. As a result, size increase in the vicinity of the intake passage can be easily suppressed.

Some arrangements of the throttle valve drive motor, however, can increase the size of the throttle device when viewed in the left direction from the throttle device's perspective or in the right direction from the throttle device's perspective. If the size of throttle device increases, it could be difficult, in some cases, to suppress size increase in the vicinity of the intake passage despite well thought out layouts of the throttle valve drive motor.

Accordingly, in the straddled vehicle (1), the throttle valve drive motor is within the outer edge of the speed reduction mechanism case when viewed in the left direction from the throttle device's perspective or in the right direction from the throttle device's perspective. Further, the moving range of the throttle valve is within the outer edge of the speed reduction mechanism case when viewed in the left direction from the throttle device's perspective or in the right direction from the throttle device's perspective. Consequently, in the straddled vehicle (1), the space ratio of the speed reduction mechanism to the throttle device is large when viewed in the left direction from the throttle device's perspective or in the right direction from the throttle device's perspective. Thus, when viewed in the left direction from the throttle device's perspective or in the right direction from the throttle device's perspective, the size of the outer shape of the throttle device is heavily dependent on the size of the outer shape of the speed reduction mechanism. As a result, when viewed in the left direction from the throttle device's perspective or in the right direction from the throttle device's perspective, the size of the throttle device does not greatly vary even if the speed reduction mechanism could rotate about the throttle valve rotation axis with respect to the throttle body to change the position of the throttle valve drive motor. In other words, when viewed in the left direction from the throttle device's perspective or in the right direction from the throttle device's perspective, the size of the outer shape of the throttle device is nearly independent on the position of the throttle valve drive motor. As a result, even if the throttle valve drive motor is arranged at a position suitable for suppressing size increase in the vicinity of the intake passage, the size of the throttle device is unlikely to increase when viewed in the left direction from the throttle device's perspective or in the right direction from the throttle device's perspective. Thus, size increase in the vicinity of the intake passage is suppressed.

A straddled vehicle (2) is the straddled vehicle (1), wherein the rotation axes of the plurality of gears extend in the left-right direction from the throttle device's perspective.

According to the straddled vehicle (2), suppression of size increase of the throttle device in the left-right direction from the throttle device's perspective is achieved. More specifically, a plurality of gears includes only spur gears and/or helical gears. The spur gears and/or the helical gears have a thin structure in the direction in which the rotation axis extends. The rotation axes of the plurality of gears extend in the left-right direction from the throttle device's perspective. This allows suppression of increase in the size of the reduction mechanism in the left-right direction from the throttle device's perspective. As a result, suppression of increase in the size of the throttle device is achieved in the left-right direction from the throttle device's perspective.

A straddled vehicle (3) is any one of the straddled vehicle (1) to (2), wherein the throttle valve drive motor rotation axis and the throttle valve rotation axis extend in the left-right direction from the vehicle's perspective when the vehicle body frame is in an upright position, and the throttle valve drive motor rotation axis is arranged at a position different from the throttle valve rotation axis in the front-back direction from the vehicle's perspective when viewed in the down direction of the vehicle body's perspective when the vehicle body frame is in an upright position.

In the straddled vehicle (3), the throttle valve drive motor rotation axis is arranged at a position different from the throttle valve rotation axis in the front-back direction from the vehicle's perspective when viewed in the down direction from the vehicle's perspective when the vehicle body frame is in an upright position. Because of this, the throttle valve drive motor rotation axis is not arranged up of the throttle valve rotation axis, wherein the up is in the perspective of the vehicle. In other words, the position of the throttle valve drive motor in the straddled vehicle can be limited not to be high in the up-down direction from the vehicle's perspective.

A straddled vehicle (4) is any one of the straddled vehicles (1) to (3), wherein the throttle valve drive motor further includes a throttle valve drive motor rotor rotatable together with the throttle valve drive motor rotation shaft and a throttle valve drive motor case housing the throttle valve drive motor rotor, wherein a plurality of gears includes a largest gear, of which the radius is largest among the plurality of gears, the radius of the largest gear being larger than the radius of the moving range of the throttle valve and the radius of the throttle valve drive motor case when viewed in the left direction from the throttle device's perspective or in the right direction from the throttle device's perspective.

The foregoing and other objects, features, aspects and advantages of the present teaching will become more apparent from the following detailed description of embodiments of the present teaching in conjunction with the accompanying drawings.

As used herein, the term "and/or" includes any or all combinations of one or more related listed items.

As used herein, the use of the term "including", "comprising" or "having" and variations thereof identifies the presence of the described features, steps, operations, elements, components and/or their equivalents, but can include one or more of the steps, operations, elements, components, and/or groups thereof.

Unless otherwise defined, all terms (including technical and scientific terms) used herein have the same meaning as commonly understood by one of ordinary skill in the art to which the present teaching belongs.

Terms such as those defined in commonly used dictionaries should be interpreted as having a meaning consistent with one in the context of the relevant art and in this disclosure, and they are not interpreted in an ideal or overly formal sense unless explicitly defined herein.

### Effect of the teaching

The present teaching can suppress size increase in the vicinity of the intake passage.

### Brief description of the drawings

FIG. 1 illustrates a straddled vehicle 1.
FIG. 2 is a sectional view showing the internal structure of a speed reduction mechanism 104 in a throttle device 68.
FIG. 3 is a view of an engine 66 and throttle devices 68a through 68c when viewed in the left direction L.

### Embodiments for carrying out the teaching

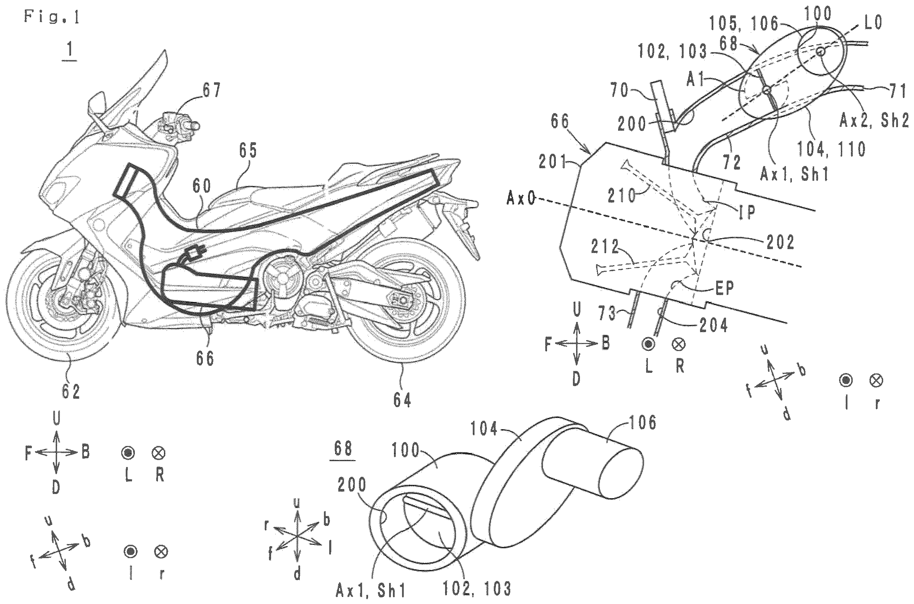

[Overall configuration] The overall configuration of the straddled vehicle 1 according to one embodiment of the present teaching will be described below with reference to the drawings. FIG. 1 illustrates the straddled vehicle 1. FIG. 1 shows a left side view of the straddled vehicle 1, a cross-sectional view of an engine 66 and around the engine 66, and a perspective view of a throttle device 68.

Hereinafter, a front direction of the straddled vehicle 1 is defined as the front direction F (front direction from the vehicle's perspective). A back direction of the straddled vehicle 1 is defined as the back direction B (back direction from the vehicle's direction). A left direction of the straddled vehicle 1 is defined as the left direction L (left direction from the vehicle's direction). A right direction of the straddled vehicle 1 is defined as the right direction R (right direction from the vehicle's direction). An up direction of the straddled vehicle 1 is defined as the up direction U (up direction from the vehicle's direction). A down direction of the straddled vehicle 1 is defined as the down direction D (down direction from the vehicle's direction). A front-back direction of the straddled vehicle 1 is defined as the front-back direction FB (front-back direction from the vehicle's direction). A left-right direction of the straddled vehicle 1 is defined as the left-right direction LR (left-right direction from the vehicle's perspective). An up-down direction of the straddled vehicle 1 is defined as the up-down direction UD (up-down direction from the vehicle's perspective). The front direction of the straddled vehicle 1 refers to the front direction with respect to a rider on the straddled vehicle 1. The back direction of the straddled vehicle 1 refers to the back direction with respect to a rider on the straddled vehicle 1. The left direction of the straddled vehicle 1 refers to the left direction with respect to a rider on the straddled vehicle 1. The right direction of the straddled vehicle 1 refers to the right direction with respect to a rider on the straddled vehicle 1. The up direction of the straddled vehicle 1 refers to the up direction with respect to a rider on the straddled vehicle 1. The down direction of the straddled vehicle 1 refers to the down direction with respect to a rider on the straddled vehicle 1.

In the present specification, an axis or a member extending in the front-back direction does not necessarily indicate only an axis or a member that is parallel to the front-back direction. An axis or a member extending in the front-back direction includes an axis or a member leaned to the range of ± 45 ° with respect to the front-back direction. Similarly, an axis or a member extending in the up-down direction includes an axis or a member leaned to the range of ± 45 ° with respect to the up-down direction. An axis or a member extending in the left-right direction includes an axis or a member leaned to the range of ± 45 ° with respect to the left-right direction. The upright position of a vehicle body frame 60 means a position in which a front wheel is neither steered nor leaned while a rider is not on the vehicle and fuel is not mounted on the straddled vehicle 1.

When any two members in this specification are defined as a first member and a second member, the relationship between any two members means as follows: When the present specification describes that the first member is supported by the second member, this description includes a case where the first member is attached to the second member so as to be immovable (i.e., fixed) with respect to the second member, and a case where the first member is attached to the second member so as to be movable with respect to the second member. In addition, description where the first member is supported by the second member includes both a case where the first member is directly attached to the second member and a case where the first member is attached to the second member via the third member.

The present description where the first member and the second member are arranged in the front-back direction indicates as follows: When the first member and the second member are viewed in the direction perpendicular to the front-back direction, both the first member and the second member are arranged on any straight lines indicating the front-back direction. The present description where the first member and the second member are arranged in the front-back direction when viewed in the up or down direction indicates as follows: When the first member and the second member are viewed in the up or down direction, both the first member and the second member are arranged on any straight lines indicating the front-back direction. In this case, when the first member and the second member are viewed in the left direction or the right direction different from the up direction and the down direction, either one of the first member and the second member may not be arranged on any straight lines indicating the front-back direction. The first member and the second member may be in contact with each other. The first member and the second member may be away from each other. There may be a third member between the first member and the second member. This definition is also applied to directions other than the front-back direction.

The present description where the first member is arranged ahead of the second member indicates as follows: The first member is arranged ahead of a plane passing through the front end of the second member and orthogonal to the front-back direction. In this case, the first member and the second member may or may not be arranged in the front-back direction. This definition is also applied to directions other than the front-back direction.

The present description where the first member is arranged in front of the second member indicates as follows: At least a part of the first member is within a region through which the second member passes when the second member is translated forward. Thus, the first member may be within a region through which the second member passes when the second member is translated forward, or may project from a region through which the second member passes when the second member is translated forward. In this case, the first member and the second member are arranged in the front-back direction. This definition is also applied to directions other than the front-back direction.

The present description where the first member is arranged in front of the second member when viewed in the left direction or the right direction indicates as follows: The first member and the second member are arranged in the front-back direction when viewed in the left direction or the right direction, and a portion of the first member facing the second member is arranged in front of the second member when viewed in the left direction or the right direction. In this definition, the first member and the second member may not be arranged in the front-back direction in three dimensions. This definition is also applied to directions other than the front-back direction.

In this specification, unless otherwise described, each portion of the first member is defined as follows: The front portion of the first member means the front half of the first member. The back portion of the first member means the back half of the first member. The left portion of the first member means the left half of the first member. The right portion of the first member means the right half of the first member. The up portion of the first member means the up half of the first member. The down portion of the first member means the down half of the first member. The up end of the first member means the end of the first member in the up direction. The down end of the first member means the end of the first member in the down direction. The front end of the first member means the end of the first member in the front direction. The back end of the first member means the end of the first member in the back direction. The right end of the first member means the end of the first member in the right direction. The left end of the first member means the end of the first member in the left direction. The up end portion of the first member means the up end of the first member and the vicinity thereof. The down end portion of the first member means the down end of the first member and the vicinity thereof. The front end portion of the first member means the front end of the first member and the vicinity thereof. The back end portion of the first member means the back end of the first member and the vicinity thereof. The right end portion of the first member means the right end of the first member and the vicinity thereof. The left end portion of the first member means the left end of the first member and the vicinity thereof. The first member means a member constituting the straddled vehicle 1.

The present description where a component (a member, a space or an opening) is formed (positioned or provided) between the first member and the second member means that there is a component between the first member and the second member in a direction in which the first member and the second member are arranged. Note that such a component may or may not project from the first member or the second member to a direction orthogonal to the direction in which the first member and the second member are arranged.

One example of the straddled vehicle 1 is a motorcycle as shown in FIG. 1. The straddled vehicle 1 comprises a vehicle body frame 60, a front wheel 62, a rear wheel 64, a seat 65, an engine 66, a steering mechanism 67, a throttle device 68, an injector 70, an intake pipe 71, an intake manifold 72, and an exhaust manifold 73. The vehicle body frame 60 leans to the left direction L when the straddled vehicle 1 turns in the left direction L. The vehicle body frame 60 leans to the right direction R when the straddled vehicle 1 turns in the right direction R.

The seat 65 is arranged between the front wheel 62 and the rear wheel 64 when viewed in the down direction D. The seat 65 is supported by the vehicle body frame 60. A rider seats in the seat 65 so as to straddle. A vehicle comprising the seat 65 that a rider straddles is referred to as a straddled vehicle.

The steering mechanism 67 is supported by a front portion of the vehicle body frame 60. The steering mechanism 67 steers the front wheel 62 by rider's operation. The steering mechanism 67 includes a handle, a steering shaft, and a front fork. The structure of such the steering wheel, the steering shaft, and the front fork is the same as that of a common steering wheel, a common steering shaft, and a common front fork, and thus description thereof is omitted.

The front wheel 62 is a steering wheel of the straddled vehicle 1. The front wheel 62 is arranged at the front portion of the straddled vehicle 1. The front wheel 62 is supported by the vehicle body frame 60 through the steering mechanism 67. In addition, a rider can steer the front wheel 62 by operating the handle of the steering mechanism 67.

The rear wheel 64 is a drive wheel of the straddled vehicle 1. The rear wheel 64 is arranged at the back portion of the straddled vehicle 1. The rear wheel 64 is supported by the vehicle body frame 60 through a swing arm. The rear wheel 64 is rotated by driving force of the engine 66, which will be described later.

The engine 66 generates a driving force for rotating the rear wheel 64. The engine 66 is supported by the vehicle body frame 60. The driving force generated by the engine 66 is transmitted to the rear wheel 64 through a transmitting mechanism such as a transmission. Thus, the rear wheel 64 is rotated by the driving force generated by the engine 66.

The engine 66 is a single-cylinder engine having a single combustion chamber 202. The engine 66 includes an engine body 201, an intake valve 210, and an exhaust valve 212. The engine body 201 includes a cylinder head cover, a cylinder head, a cylinder block, and a crankcase. The cylinder head cover, the cylinder head, the cylinder block and the crankcase of the engine 66 are the same as a common cylinder head cover, a common cylinder head, a common cylinder block and a common crankcase, and thus description thereof is omitted.

The engine body 201 is arranged so that the cylinder axis Ax0 extends in the front-back direction FB when the vehicle body frame 60 is in an upright position. In other words, the engine body 201 is arranged horizontally. In this case, the cylinder head cover is arranged ahead F of the crankcase. Note that the cylinder axis Ax0 is slightly leaned in the up direction U with respect to the front-back direction FB when the vehicle body frame 60 is in an upright position.

The combustion chamber 202, an intake port IP, and an exhaust port EP are formed in the engine body 201. The combustion chamber 202 is a space formed in the cylinder head. The intake port IP is a hole connecting between the outside of the engine body 201 and the combustion chamber 202. The intake port IP introduces a mixture of fuel (for example, gasoline) and air into the combustion chamber 202. The combustion chamber 202 is a space for combustion of the mixture. The combustion chamber 202 is a space surrounded by a piston (not shown) located at a top dead center, the cylinder head, an intake valve 210, and an exhaust valve 212. The exhaust port EP is a hole connecting between the outside of the engine body 201 and the combustion chamber 202. The exhaust port EP leads exhaust gas generated by combustion of the mixture to the outside of the engine body 201.

The intake valve 210 is provided on a boundary between the intake port IP and the combustion chamber 202. When the intake valve 210 opens, the intake port IP and the combustion chamber 202 become connected. The mixtures flow into the combustion chamber 202 from the intake port IP accordingly. When the intake valve 210 closes, the intake port IP and the combustion chamber 202 become shut off.

The exhaust valve 212 is provided on a boundary between the exhaust port EP and the combustion chamber 202. When the exhaust valve 212 opens, the exhaust port EP and the combustion chamber 202 become connected. In this case, the exhaust gas flows out from the combustion chamber 202 to the exhaust port EP. When the exhaust valve 212 closes, the exhaust port EP and the combustion chamber 202 become shut off.

The engine 66 includes components other than the engine body 201, the intake valve 210, and the exhaust valve 212 (for example, a crankshaft, a piston, a camshaft). However, components other than the engine body 201, the intake valve 210, and the exhaust valve 212 in the engine 66 are the same as those other than the engine body, the intake valve, and the exhaust valve in a common engine, and thus description thereof is omitted.

The intake pipe 71, the intake manifold 72, and the throttle body 100, which will be described in detail below, are tubes through which intake air passes. Hereinafter, the end of upstream in the direction in which intake air flows in each member is referred to as the upstream end. The end of downstream in the direction in which the intake air flows in each member is referred to as the downstream end.

The intake pipe 71, the throttle body 100, which will be described in detail below, and the intake manifold 72 are connected in series in this order from upstream to downstream in the direction in which intake air flows. More specifically, the downstream end of the intake pipe 71 is connected to the upstream end of the throttle body 100, which will be described later. The upstream end of the intake manifold 72 is connected to the downstream end of the throttle body 100, which will be described later. The downstream end of the intake manifold 72 is connected to the upstream end of the intake port IP. Thus, the internal space of the intake pipe 71, the internal space of the throttle body 100, the internal space of the intake manifold 72, and the intake port IP are connected, which comprises the intake passage 200. The downstream end of the intake passage 200 is connected to the combustion chamber 202.

The exhaust manifold 73 is a tube through which exhaust gas passes. Hereinafter, the end of upstream in the direction in which the exhaust gas flows in each member is referred to as the upstream end. The end of downstream in the direction in which the exhaust gas flows in each member is referred to as the downstream end. The upstream end of the exhaust manifold 73 is connected to the downstream end of the exhaust port EP. Thus, the exhaust port EP and the internal space of the exhaust manifold 73 are connected, which comprises the exhaust passage 204. The upstream end of the exhaust passage 204 is connected to the combustion chamber 202.

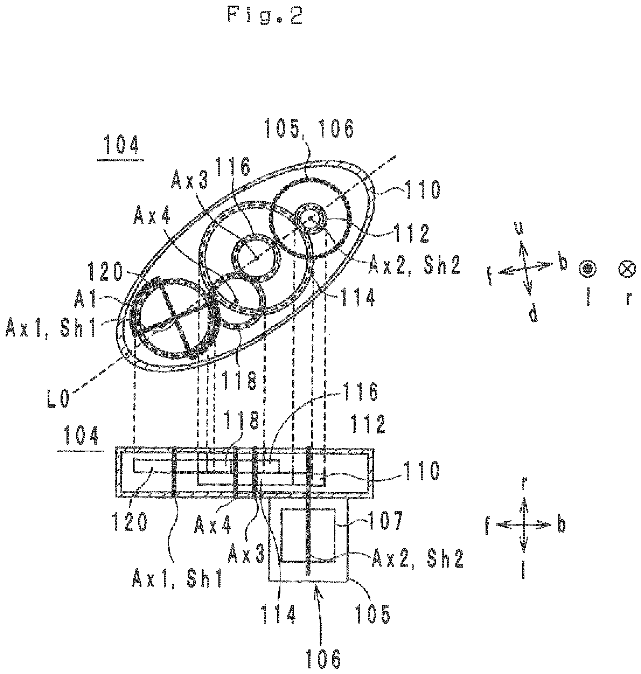

The injector 70 is supported by the intake manifold 72. The injector 70 injects fuel into the intake passage 200.
[the structure of the throttle device] Next, the throttle device 68 will be described in detail with reference to the drawings. FIG. 2 is a sectional view showing the internal structure of the speed reduction mechanism 104 in the throttle device 68. Hereinafter, the direction in which the intake air flows in the throttle body 100 is defined as the front-back direction fb ( front-back direction from the throttle device's perspective). The direction in which the throttle valve rotation axis Ax1 extends in the throttle body 100 is defined as the left-right direction lr (left-right direction from the throttle device's perspective). The direction orthogonal to the front-back direction fb and the left-right direction lr in the throttle body 100 is defined as the up-down direction ud (up-down direction from the throttle device's perspective). The front direction f (front direction from the throttle device's perspective) is a direction toward the downstream of the throttle body 100. The back direction b (back direction from the throttle device's perspective) is a direction toward the upstream of the throttle body 100. The left direction l (left direction from the throttle device's perspective) is the left direction when an observer faces the front direction f. The right direction r (right direction from the throttle device's perspective) is the right direction when an observer faces the front direction f. The up direction u (up direction from the throttle device's perspective) is the up direction when an observer faces the front direction f. The down direction d (down direction from the throttle device's perspective) is the down direction when an observer faces the front direction f.

The throttle device 68 is for regulating an amount of air flowing into the combustion chamber 202 of the engine 66. As shown in FIG. 1, the throttle device 68 includes the throttle body 100, a single throttle valve 102, the speed reduction mechanism 104, and a throttle valve drive motor 106.

The throttle body 100 has a cylindrical shape having a center axis extending in the front-back direction fb. Thus, the throttle body 100 forms a part of the intake passage 200.

The throttle valve 102 can regulate an amount of air flowing into the combustion chamber 202 by rotating about a throttle valve rotation axis Ax1 extending in the left-right direction lr. Specifically, the throttle valve 102 includes a throttle valve rotation shaft Sh1 and a throttle valve body 103. The throttle valve rotation shaft Sh1 extends in the left-right direction lr. A center axis of the throttle valve rotation shaft Sh1 is a throttle valve rotation axis Ax1. The throttle valve rotation shaft Sh1 is arranged at the front portion of the throttle body 100 and at the center of the throttle body 100 in the up down direction ud. The right end of the throttle valve rotation shaft Sh1 is supported by the throttle body 100. The left end portion of the throttle valve rotation shaft Sh1 passes through the throttle body 100. The left end of the throttle valve rotation shaft Sh1 is positioned at the speed reduction mechanism 104, which will be described later.

The throttle valve body 103 has a disc shape. The outer edge of the throttle valve body 103 matches the outer edge of the intake passage 200 formed by the throttle body 100 when viewed in the back direction b. The throttle valve rotation axis Ax1 and the throttle valve rotation shaft Sh1 pass through the center of the throttle valve body 103. Further, the throttle valve body 103 and the throttle valve rotation shaft Sh1 are integrated. Thus, the throttle valve body 103 together with the throttle valve rotation shaft Sh1 can rotate about the throttle valve rotation axis Ax1 with respect to the throttle body 100.

One example of the throttle valve drive motor 106 is a stepping motor. As shown in FIG. 2, the throttle valve drive motor 106 includes a throttle valve drive motor rotation shaft Sh2, a throttle valve drive motor case 105, and a throttle valve drive motor rotor 107. The throttle valve drive motor rotation shaft Sh2 extends in the left-right direction lr. The center axis of the throttle valve drive motor rotation shaft Sh2 is the throttle valve drive motor rotation axis Ax2. Consequently, the throttle valve drive motor rotation axis Ax2 also extends in the left-right direction lr.

The throttle valve drive motor rotor 107 is fixed to the throttle valve drive motor rotation shaft Sh2. The throttle valve drive motor case 105 has a cylindrical shape having a center axis extending in the left-right direction lr. The center axis of the throttle valve drive motor case 105 matches the throttle valve drive motor rotation axis Ax2. The throttle valve drive motor case 105 has a hollow structure. The throttle valve drive motor case 105 houses the throttle valve drive motor rotor 107. Further, the throttle valve drive motor case 105 supports the throttle valve drive motor rotation shaft Sh2 so that the throttle valve drive motor rotation shaft Sh2 can rotate about the throttle valve drive motor rotation axis Ax2. This allows the throttle valve drive motor rotor 107 together with the throttle valve drive motor rotation shaft Sh2 to rotate about the throttle valve drive motor rotation axis Ax2 with respect to the throttle valve drive motor case 105. The throttle valve drive motor 106 configured as described above rotates the throttle valve drive motor rotation shaft Sh2 and the throttle valve drive motor rotor 107 about the throttle valve drive motor rotation axis Ax2 with respect to the throttle valve drive motor case 105 when power is supplied.

The speed reduction mechanism 104 decelerates the rotation of the throttle valve drive motor rotation shaft Sh2 and transmits the decelerated rotation to the throttle valve rotation shaft Sh1. The speed reduction mechanism 104 includes a speed reduction mechanism case 110 and gears 112, 114, 116, 118, 120. The gears 112, 114, 116, 118, 120 include only spur gears. The gear 112 is fixed to the throttle valve drive motor rotation shaft Sh2. The gear 112 together with the throttle valve drive motor rotation shaft Sh2 can rotate about the throttle valve drive motor rotation axis Ax2 with respect to the speed reduction mechanism case 110. The gear 114 can rotate about the gear rotation axis Ax3 extending in the left-right direction lr with respect to the speed reduction mechanism case 110. The gear 112 and the gear 114 are engaged with each other. The gear 116 is integrated with the gear 114. Accordingly, the gear 116 and the gear 114 can rotate about the gear rotation axis Ax3 with respect to the speed reduction mechanism case 110. The gear 118 can rotate about the gear rotation axis Ax4 extending in the left-right direction lr with respect to the speed reduction mechanism case 110. The gear 116 and the gear 118 are engaged with each other. The gear 120 is fixed to the throttle valve rotation shaft Sh1. The gear 120 and the throttle valve rotation shaft Sh1 can rotate about the throttle valve rotation axis Ax1 with respect to the speed reduction mechanism case 110. The gear 118 and the gear 120 are engaged with each other. Consequently, the rotation of the gear 112 is transmitted to the gear 120 through the gears 114, 116, 118.

Here the gear 114 is the largest gear, of which the radius is largest among the gears 112, 114, 116, 118, 120. In addition, a range through which the throttle valve 102 (See FIG. 1) passes in rotating is defined as the moving range A1 of the throttle valve 102. In this case, the radius of the gear 114 is larger than the radius of the moving range A1 of the throttle valve 102 when viewed in the left direction 1 or the right direction r, which is shown in FIG. 2. Further, as shown in FIG. 2, the radius of the gear 114 is larger than the radius of the throttle valve drive motor case 105 when viewed in the left direction l or the right direction r.

The speed reduction mechanism case 110 houses the gears 112, 114, 116, 118, 120. The speed reduction mechanism case 110 has a box shape. The gears 112, 114, 116, 118, 120 are arranged in the speed reduction mechanism case 110 such that the throttle valve rotation axis Ax1 (throttle valve rotating shaft Sh1), the gear rotation axes Ax4 and Ax3, and the throttle valve drive motor rotation axis Ax2 (throttle valve drive motor rotation shaft Sh2) are arranged in this order from the front direction f to the back direction b. Thus, the throttle valve rotation axis Ax1 is arranged at a position different from the throttle valve drive motor rotation axis Ax2 when viewed in the left direction l or the right direction r. However, the throttle valve rotation axis Ax1 (throttle valve rotating shaft Sh1), the gear rotation axes Ax4 and Ax3, and the throttle valve drive motor rotation axis Ax2 (throttle valve drive motor rotation shaft Sh2) are not arranged on the same straight line.

In the speed reduction mechanism case 110, a straight line passing through the throttle valve rotation axis Ax1 and the throttle valve drive motor rotation axis Ax2 when viewed in the left direction 1 or the right direction r is defined as the straight line L0. When viewed in the left direction 1 or the right direction r, the length of the speed reduction mechanism case 110 in the direction in which the straight line L0 extends is longer than the length of the speed reduction mechanism case 110 in the direction perpendicular to the direction in which the straight line L0 extends. In the present embodiment, the speed reduction mechanism case 110 has an elliptical shape having a long axis approximately parallel to the direction in which the straight line L0 extends when viewed in the left direction l or the right direction r. The speed reduction mechanism 104 as described above rotates the throttle valve body 103 about the throttle valve rotation axis Ax1 with respect to the throttle body 100 by transmitting the rotation of the throttle valve drive motor rotation shaft Sh2 while reducing the rotation speed through the gears 112, 114, 116, 118, 120.

The speed reduction mechanism case 110 supports the throttle valve drive motor 106. The throttle valve drive motor 106 is fixed to the left surface of the speed reduction mechanism case 110. More specifically, the center axis of the throttle valve drive motor case 105 (i.e., the throttle valve drive motor rotation axis Ax2) extends in the left-right direction lr. Thus, the left and right surfaces of the throttle valve drive motor case 105 have circular and planar shapes. The entire right surface of the throttle valve drive motor case 105 has contact with the back portion of the left surface of the speed reduction mechanism case 110. Thus, the throttle valve drive motor 106 is arranged at the left l of the speed reduction mechanism 104. The throttle valve drive motor 106 is within the outer edge of the speed reduction mechanism case 110 when viewed in the left direction l or the right direction r. In other words, the throttle valve drive motor 106 does not project beyond the outer edge of the speed reduction mechanism case 110 when viewed in the left direction l or the right direction r. The wiring for supplying electric power to the throttle valve drive motor 106 is not a part of the throttle valve drive motor 106. Consequently, the wiring for supplying electric power to the throttle valve drive motor 106 may not be within the outer edge of the speed reduction mechanism case 110 when viewed in the left direction l or the right direction r. In addition, a portion contributing to supporting the throttle valve drive motor 106 of the member housing the gears 112, 114, 116, 118, 120 (i.e., a portion that is in contact with the throttle valve drive motor 106) is a part of the speed reduction mechanism case 110 since the speed reduction mechanism case 110 supports the throttle valve drive motor 106.

The throttle body 100 is fixed to the right surface of the speed reduction mechanism case 110. Accordingly, the throttle body 100 and the throttle valve 102 are arranged at the right r of the speed reduction mechanism 104. Here the speed reduction mechanism 104 extends in the direction in which the straight line L0 extends when viewed in the left direction l or the right direction r. When viewed in the left direction 1, the straight line L0 is leaned about 20 ° counterclockwise about the throttle valve rotation axis Ax1 with respect to the center axis of the throttle body 100. Thus, when viewed in the left direction l or the right direction r, the speed reduction mechanism 104 projects to the diagonal direction from the throttle body 100 in the back-up direction bu.

As shown in FIG. 1, the moving range A1 of the throttle valve 102 is within the outer edge of the speed reduction mechanism case 110 when viewed in the left direction l or the right direction r. In other words, the moving range A1 of the throttle valve 102 does not project beyond the outer edge of the speed reduction mechanism case 110 when viewed in the left direction l or the right direction r.

As shown in FIG. 1, the throttle device 68 as described above is arranged such that the left-right direction lr matches the left-right direction LR when the vehicle body frame 60 is in an upright position. Accordingly, the throttle valve rotation axis Ax1 (throttle valve rotating shaft Sh1), the throttle valve drive motor rotation axis Ax2 (throttle valve drive motor rotation shaft Sh2), and the gear rotation axes Ax3, Ax4 extend in the left-right direction LR when the vehicle body frame 60 is in an upright position. Note that the up-down direction ud is slightly leaned toward the front direction F with respect to the front-back direction FB. A part of the throttle valve drive motor 106 overlaps the intake pipe 71 when viewed in the left direction l or the right direction r.

In addition, as shown in FIG. 1, the throttle valve drive motor rotation axis Ax2 is arranged at a position different from the throttle valve rotation axis Ax1 in the front-back direction FB when viewed in the down direction D when the vehicle body frame 60 is in an upright position. In the present embodiment, the throttle valve drive motor rotation axis Ax2 is arranged behind B the throttle valve rotation axis Ax1. Thus, the throttle valve drive motor rotation axis Ax2 does not overlap the throttle valve rotation axis Ax1 when viewed in the down direction D when the vehicle body frame 60 is in an upright position.

[effect] The straddled vehicle 1 according to the present embodiments can suppress size increase in the vicinity of the intake passage 200. More specifically, the throttle valve 102 is arranged at the right r of the speed reduction mechanism 104. The throttle valve drive motor 106 is arranged at the left 1 of the speed reduction mechanism 104. Accordingly, the intake passage 200 can't intervene with the throttle valve drive motor 106. Consequently, the throttle valve drive motor 106 can be arranged so as to overlap the intake passage 200 when viewed in the left direction l or the right direction r, or the throttle valve drive motor can be arranged up u of the intake passage 200, or the throttle valve drive motor can be arranged down d of the intake passage 200. Thus, the straddled vehicle 1 has high flexibility in arrangements of the throttle valve drive motor 106. Such high flexibility in arrangements of the throttle valve drive motor 106 allows the throttle valve drive motor 106 to be arranged at a position suitable for suppressing size increase in the vicinity of the intake passage 200. As a result, it is easy to suppress size increase in the vicinity of the intake passage 200.

Some arrangements of the throttle valve drive motor 106, however, can increase the size of the throttle device 68 when viewed in the left direction l or the right direction r. If the size of the throttle device 68 increases, it could be difficult, in some cases, to suppress size increase in the vicinity of the intake passage 200 despite well thought out arrangements of the throttle valve drive motor 106.

For that reason, in the straddled vehicle 1, the throttle valve drive motor 106 is within the outer edge of the speed reduction mechanism case 110 when viewed in the left direction l or the right direction r. Further, the moving range A1 of the throttle valve 102 is within the outer edge of the speed reduction mechanism case 110 when viewed in the left direction l or the right direction r. Consequently, in the straddled vehicle 1, the space ratio of the speed reduction mechanism 104 to the throttle device 68 is large when viewed in the left direction l or the right direction r. Thus, the size of the outer shape of the throttle device 68 is heavily dependent on the size of the outer shape of the speed reduction mechanism 104 when viewed in the left direction l or the right direction r. Accordingly, the size of the throttle device 68 does not greatly vary when viewed in the left direction l or the right direction r even if the speed reduction mechanism 104 could rotate about the throttle valve rotation axis Ax1 with respect to the throttle body 100 to change the position of the throttle valve drive motor 106. In other words, the size of the outer shape of the throttle device 68 is nearly independent on the position of the throttle valve drive motor 106 when viewed in the left direction l or the right direction r. As a result, the size of the throttle device 68 is unlikely to increase when viewed in the left direction l or the right direction r even if the throttle valve drive motor 106 is arranged at a position suitable for suppressing size increase in the vicinity of the intake passage 200. Thus, size increase in the vicinity of the intake passage 200 is suppressed.

In addition, the straddled vehicle 1 allows the throttle valve drive motor 106 to be readily available for fixing the throttle device 68. More specifically, the throttle device 68 is fixed directly or indirectly to the vehicle body frame 60 by attaching a fastening member such as a screw to, for example, the throttle body 100, the speed reduction mechanism 104, or the throttle valve drive motor 106. Here a case where a fastening member is attached to the throttle valve drive motor 106 will be described below. In this case, a fastening member for fixing the throttle valve drive motor 106 directly or indirectly to the vehicle body frame 60 is attached to the throttle valve drive motor 106. If the throttle valve drive motor 106 is arranged at the right r of the speed reduction mechanism 104, the throttle body 100 could become positioned in the up direction u or the down direction d of the throttle valve drive motor 106. In this case, it can be difficult to attach the fastening member to the throttle valve drive motor 106 from the up direction u or the down direction d.

For that reason, in the straddled vehicle 1, the throttle valve 102 is arranged at the right r of the speed reduction mechanism 104. The throttle valve drive motor 106 is arranged at the left l of the speed reduction mechanism 104. Accordingly, the throttle body 100 is not positioned up u or down d of the throttle valve drive motor 106. Consequently, a fastening member can be attached to the throttle valve drive motor 106 from any of the directions of the up direction u, the down direction d, the left direction l, and the right direction r of the throttle valve drive motor 106. As a result, that allows to easily attach the fastening member to the throttle valve drive motor 106. In other words, the throttle valve drive motor 106 becomes readily available for fixing the throttle device 68.

The straddled vehicle 1 has high flexibility in the size of the throttle valve drive motor 106. More specifically, high flexibility in arrangements of the throttle valve drive motor 106 allows the throttle valve drive motor 106 having a large radius and the throttle valve drive motor 106 having a small radius to be available.

In addition, the straddled vehicle 1 has high flexibility in arrangements of the injector 70. More specifically, the throttle device 68 and the injector 70 are arranged close to each other in many cases. Accordingly, the throttle device 68 restricts the position of the injector 70. Thus, in the straddled vehicle 1, the throttle valve 102 is arranged at the right r of the speed reduction mechanism 104. The throttle valve drive motor 106 is arranged at the left l of the speed reduction mechanism 104. Such arrangements allow the throttle valve drive motor 106 to be placed away from the intake passage 200. As a result, the injector 70 can be arranged at the intake passage 200 without restriction of the throttle valve drive motor 106. In other words, the straddled vehicle 1 has high flexibility in arrangements of the injector 70.

The straddled vehicle 1 can suppress increase in the size of the throttle device 68 in the left-right direction lr. More specifically, the gears 112, 114, 116, 118, 120 include only spur gears. The spur gear has a thin structure in the direction in which the rotation axis extends. The rotation axes of the gears 112, 114, 116, 118, 120 extend in the left-right direction lr. This suppresses increase in the size of the speed reduction mechanism 104 in the left-right direction lr. As a result, the increase in the size of the throttle device 68 in the left-right direction lr is suppressed.

In the straddled vehicle 1, the throttle valve drive motor rotation axis Ax2 is arranged at a position different from the throttle valve rotation axis Ax1 in the front-back direction FB when viewed in the down direction D when the vehicle body frame 60 is in an upright position. As a result, the throttle valve drive motor rotation axis Ax2 is not arranged up U the throttle valve rotation axis Ax1. In other words, the position of the throttle valve drive motor 106 in the straddled vehicle 1 can be limited not to be high in the up-down direction UD. However, this does not preclude the throttle valve drive motor rotation axis Ax2 from being arranged up U of the throttle valve rotation axis Ax1 in the straddled vehicle 1.

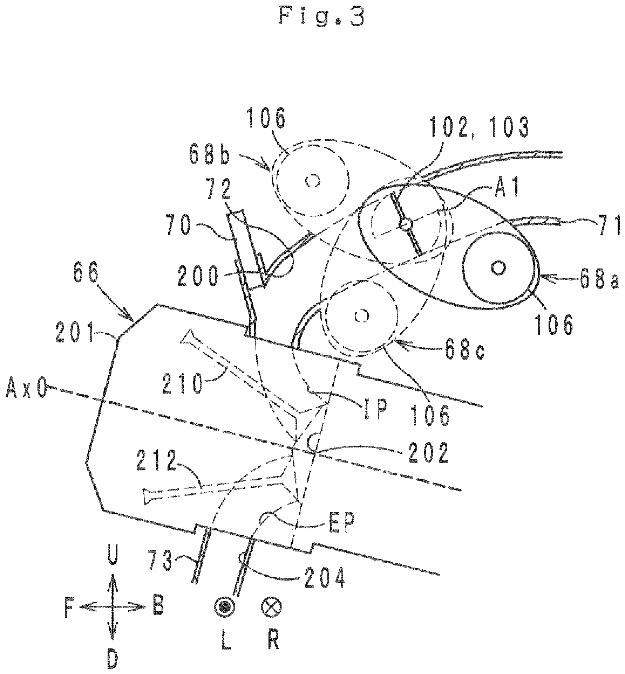

(Modifications) The throttle devices 68a to 68c according to modifications will be described below. FIG. 3 is a view of the engine 66 and the throttle devices 68a to 68 c when viewed in the left direction L.

In the throttle device 68, the throttle valve drive motor 106 is arranged back-up bu of the throttle valve 102 when viewed in the left direction 1 or the right direction r. On the other hand, in the throttle device 68a, the throttle valve drive motor 106 is arranged back-down bd of the throttle valve 102 when viewed in the left direction 1 or the right direction r. In the throttle device 68b, the throttle valve drive motor 106 is arranged at the front-up fu of the throttle valve 102 when viewed in the left direction 1 or the right direction r. In the throttle device 68c, the throttle valve drive motor 106 is arranged at a front-down fd of the throttle valve 102 when viewed in the left direction 1 or the right direction r. As described above, the throttle valve drive motor 106 can be arranged at any position up u, down d, at the front f, or at the back b of the throttle valve 102 when viewed in the left direction 1 or the right direction r.

(Other Embodiments) Embodiments and modifications that are at least described or illustrated herein are for ease of understanding of the present disclosure and are not intended to limit the scope of the present invention and embodiments and the modifications described above may be modified and improved without departing from the scope of the invention as defined by the appended claims.

Such purposes include equivalent elements, corrections, deletions, combinations (for example, combinations of features across embodiments and modifications), improvements, and modifications that can be recognized by those skilled in the art based on the embodiments disclosed herein. The limitations in the claims should be broadly interpreted based on the terms used in the claims and should not be limited to the embodiments and modifications described herein or during prosecution of the present application. Such embodiments and modifications should be construed as being non-exclusive. For example, as used herein, the terms "preferably" and "may be" are non-exclusive and mean "be preferred but not limited to" and "may be but not limited to".

The engine 66 may be a multi-cylinder engine having a plurality of combustion chambers 202. When the engine 66 is a multi-cylinder engine, a plurality of throttle devices 68 may be provided so as to correspond to a plurality of combustion chambers 202. When the engine 66 is a multi-cylinder engine, a single throttle device 68 including a single throttle valve 102 may be provided. When the engine 66 is a multi-cylinder engine, a single throttle device 68 including a plurality of throttle valves 102 may be provided. In this case, the plurality of throttle valves 102 are provided so as to correspond to a plurality of combustion chambers 202.

In the throttle devices 68, 68a to 68c, the gears 112, 114, 116, 118, 120 include only spur gears. However, the gears 112, 114, 116, 118, 120 may include only helical gears. The gears 112, 114, 116, 118, 120 may include only spur gears and helical gears. In other words, it is minimally required that the gears 112, 114, 116, 118, 120 do not include gears other than spur gears and helical gears.

Although FIG.1 shows the relationship between the up-down direction UD, the left-right direction LR, the front-back direction FB and the up-down direction ud, the left-right direction lr, the front-back direction fb, this relationship is an example, and relationships are not limited to the relationship shown in FIG. 1.

The throttle devices 68, 68a to 68c include five gears 112, 114, 116, 118, 120. However, the throttle devices 68, 68a to 68c may include six or more gears, or four or less gears. The throttle devices 68, 68a to 68c have four axes (throttle valve rotation axis Ax1, throttle valve drive motor rotation axis Ax2, and gear rotation axis Ax3, Ax4). However, the throttle devices 68, 68a to 68c may have three or less axes, or may have five or more axes.

In the throttle devices 68, 68a to 68c, the radius of the gear 114, which is the largest gear, is larger than the radius of the moving range A1 of the throttle valve 102 and the radius of the throttle valve drive motor case 105 when viewed in the left direction l or the right direction r, as shown in FIG. 2. However, the gear 114 may be equal to or smaller than the radius of the moving range A1 of the throttle valve 102 or the radius of the throttle valve drive motor case 105, or may be equal to or smaller than the radius of the moving range A1 of the throttle valve 102 and the radius of the throttle valve drive motor case 105 when viewed in the left direction l or the right direction r. Further, the gears 112, 116, 118, 120 may be equal to or smaller than the radius of the moving range A1 of the throttle valve 102 or the radius of the throttle valve drive motor case 105, or may be equal to or smaller than the radius of the moving range A1 of the throttle valve 102 and the radius of the throttle valve drive motor case 105 when viewed in the left direction l or the right direction r.

In the straddled vehicle 1, the vehicle body frame 60 is leaned in the left direction L when the straddled vehicle 1 turns in the left direction L, and is leaned in the right direction R when the straddled vehicle 1 turns in the right direction R. In other words, the straddled vehicle 1 is a leaning vehicle. However, in the straddled vehicle 1, the vehicle body frame 60 may not lean in the left direction L when the straddled vehicle 1 turns in the left direction L, and may not lean in the right direction R when the straddled vehicle 1 turns in the right direction R. In other words, the straddled vehicle 1 may not be a leaning vehicle.

The straddled vehicle 1 is a motorcycle having two wheels, which are a front wheel 62 and a rear wheel 64. However, the straddled vehicle 1 may have three or more wheels. In other words, the straddled vehicle 1 may be a tricycle having two front wheels and one rear wheel, or a tricycle having one front wheel and two rear wheels. Such the tricycle may or may not be a leaning vehicle. Further, when the motorcycle is a leaning vehicle having one front wheel and two rear wheels, one front wheel may be leaned together with the vehicle body frame, and the two rear wheels may not be leaned together with the vehicle body frame. The straddled vehicle may be a four wheel motor vehicle having two front wheels and two rear wheels. The four wheel motor vehicle may or may not be a leaning vehicle. One example of a four wheel motor vehicle that is not a leaning vehicle is an ATV (All Terrain Vehicle).

In the straddled vehicle 1, the injector 70 injects fuel into the intake passage 200. However, the injector 70 may inject fuel into the combustion chamber 202.

In the straddled vehicle 1, the intake passage 200 extends linearly in the back-up direction BU from the engine body 201. However, the layout of the intake passage 200 is not limited to the layout shown in FIG. 1. The intake passage 200 may, for example, extend linearly in the front-up direction FU from the engine body 201.

In the throttle devices 68, 68a to 68c, the throttle valve body 103 has a disc shape. However, the throttle valve body 103 may have an elliptical plate shape or an oval plate shape. The oval shape refers to a ring consisting of two semicircles connected by straight lines at each end.

The speed reduction mechanism 104 has an elliptical shape when viewed in the left direction l or the right direction r. However, the speed reduction mechanism 104 may have a shape other than an elliptical shape when viewed in the left direction l or the right direction r. The speed reduction mechanism 104 may have a rectangular shape when viewed in the left direction 1 or the right direction r.

The throttle device of the present teaching includes a throttle device with a structure symmetrical to the throttle device 68 shown in FIG. 1. In other words, the throttle body 100 may be arranged at the left 1 of the speed reduction mechanism 104 and the throttle valve drive motor 106 may be arranged at the right r of the speed reduction mechanism 104 in the perspective view of FIG. 1. In this case, the axis in the up-down direction ud and the axis in the left-right direction lr may be rotated by 180 ° about the axis in the front-back direction fb. Accordingly, the up-down direction ud is reversed, and the left-right direction lr is reversed. In other words, the up direction u in FIG. 1 turns to the down direction d, and the down direction d in FIG. 1 turns to the up direction u. Further, the left direction 1 in FIG. 1 turns to the right direction r, and the right direction r in FIG. 1 turns to the left direction l. As a result, the throttle valve 102 is arranged in the right direction r of the speed reduction mechanism 104 and the throttle valve drive motor 106 is arranged in the left direction 1 of the speed reduction mechanism 104 even in a throttle device with a structure symmetrical to the throttle device 68.

The engine body 201 is arranged horizontally. However, the engine body 201 may be arranged in a manner other than the horizontal arrangement. The engine body 201 may have, for example, a forward leaning arrangement in which the cylinder axis Ax0 is leaned at an angle of 45 ° or less in the front direction F with respect to the up-down direction UD. Further, the engine body 201 may have, for example, a backward leaning arrangement in which the cylinder axis Ax0 is leaned at an angle of 45 ° or less in the back direction B with respect to the up-down direction UD.

In the throttle device 68, a part of the throttle valve drive motor 106 overlaps the intake pipe 71 when viewed in the left direction 1 or the right direction r. However, the entire throttle valve drive motor 106 may overlap the intake pipe 71 when viewed in the left direction l or the right direction r. Further, the entire throttle valve drive motor 106 may not overlap the intake pipe 71 when viewed in the left direction 1 or the right direction r.

### Reference signs list

1 straddled vehicle
60 vehicle body frame
62 front wheel
64 rear wheel
65 seat
66 engine
67 steering mechanism
68, 68a, 68b, 68c throttle device
70 injector
71 intake pipe
72 intake manifold
73 exhaust manifold
100 throttle body
102 throttle valve
103 throttle valve body
104 speed reduction mechanism
105 throttle valve drive motor case
106 throttle valve drive motor
107 throttle valve drive motor rotor
110 speed reduction mechanism case
112, 114, 116, 118, 120 gear
200 intake passage
201 engine body
202 combustion chamber
204 exhaust passage
210 intake valve
212 exhaust valve
A1 moving range
Ax0 cylinder axis
Ax1 throttle valve rotation axis
Ax2 throttle valve drive motor rotation axis
Ax3, Ax4 gear rotation axis
EP exhaust port
LP intake port
Sh1 throttle valve rotation shaft
Sh2 throttle valve drive motor rotation shaft

## Claims

1. A straddled vehicle (1) comprising:
a vehicle body frame (60);
an engine (66) supported by the vehicle body frame (60), the engine (66) being a single-cylinder engine having a single combustion chamber (202); and,
a throttle device (68, 68a, 68b, 68c),
wherein the throttle device (68, 68a, 68b, 68c) includes:
a throttle body (100) forming a part of an intake passage (200) connected to the single combustion chamber (202);
a single throttle valve (102) for regulating an amount of air flowing into the single combustion chamber (202) by rotating about a throttle valve rotation axis (Ax1) extending, from the throttle device's perspective, in a left-right direction;
a throttle valve drive motor (106) including a throttle valve drive motor rotation shaft (Sh2) having a center axis, which is a rotation axis (Ax2) of the throttle valve drive motor (106) extending in the left-right direction from the throttle device's perspective, the throttle valve drive motor (106) being configured to rotate the throttle valve drive motor rotation shaft (Sh2) about the rotation axis (Ax2) of the throttle valve drive motor (106); and,
a speed reduction mechanism (104) including:
plurality of gears (112, 114, 116, 118, 120) including only spur gears and/or helical gears; and,
a speed reduction mechanism case (110) housing the plurality of gears (112, 114, 116, 118, 120) and supporting the throttle valve drive motor (106),
wherein the speed reduction mechanism (104) is configured to rotate the single throttle valve (102) about the throttle valve rotation axis (Ax1) by transmitting rotation of the throttle valve drive motor rotation shaft (Sh2) while reducing the rotation speed through the plurality of gears (112, 114, 116, 118, 120),
wherein the throttle device (68, 68a, 68b, 68c) satisfies (A), (B), (C), (D), and (E):
(A) the single throttle valve (102) is arranged right of the speed reduction mechanism (104), the right being in the perspective of the throttle device (68, 68a, 68b, 68c);
(B) the throttle valve drive motor (106) is arranged left of the speed reduction mechanism (104), the left being in the perspective of the throttle device (68, 68a, 68b, 68c);
(C) the throttle valve drive motor (106) is within an outer edge of the speed reduction mechanism case (110) when viewed in the left direction from the throttle device's perspective or in the right direction from the throttle device's perspective;
(D) moving range of the single throttle valve (102) is within the outer edge of the speed reduction mechanism case (110) when viewed in the left direction from the throttle device's perspective or in the right direction from the throttle device's perspective;
(E) the throttle valve rotation axis (Ax1) is arranged at a position different from the throttle valve drive motor rotation axis (Ax2) when viewed in the left direction from the throttle device's perspective or in the right direction from the throttle device's perspective, wherein the throttle valve drive motor (106) can be arranged at any position up, down, at the front, or at the back of the throttle valve (102) when viewed in the left direction from the throttle device's perspective or the right direction from the throttle device's perspective.

2. The straddled vehicle (1) according to claim 1, wherein the rotational axes of the plurality of gears (112, 114, 116, 118, 120) extend in the left-right direction from the throttle device's perspective.

3. The straddled vehicle (1) according to any one of claims 1 to 2, wherein the throttle valve drive motor rotation axis (Ax2) and the throttle valve rotation axis (Ax1) extend in the left-right direction from the vehicle's perspective when the vehicle body frame (60) is in an upright position, and the throttle valve drive motor rotation axis (Ax2) is arranged at a position different from the throttle valve rotation axis (Ax1) in the front-back direction from the vehicle's perspective when viewed in the down direction from the vehicle's perspective when the vehicle body frame (60) is in an upright position.

4. The straddled vehicle (1) according to any one of claims 1 to 3, wherein the throttle valve drive motor (106) further includes a throttle valve drive motor rotor (107) rotatable together with the throttle valve drive motor rotation shaft (Sh2) and a throttle valve drive motor case (105) housing the throttle valve drive motor rotor (107), wherein the plurality of gears (112, 114, 116, 118, 120) includes a largest gear (114), of which the radius is largest among the plurality of gears (112, 114, 116, 118, 120), the radius of the largest gear (114) being larger than the radius of the moving range of the single throttle valve (102) and the radius of the throttle valve drive motor case (105) when viewed in the left direction from the throttle device's perspective or in the right direction from the throttle device's perspective.

## Patentansprüche

1. Ein Spreizsitzfahrzeug (1), das folgende Merkmale aufweist:
einen Fahrzeugkörperrahmen (60);
einen Verbrennungsmotor (66), der von dem Fahrzeugkörperrahmen (60) gehalten wird, wobei der Verbrennungsmotor (66) ein Einzylinder-Verbrennungsmotor mit einer einzelnen Verbrennungskammer (202) ist; und
eine Drosselvorrichtung (68, 68a, 68b, 68c),
wobei die Drosselvorrichtung (68, 68a, 68b, 68c) Folgendes umfasst:
einen Drosselkörper (100), der einen Teil eines Einlasskanals (200) bildet, der mit der einzelnen Verbrennungskammer (202) verbunden ist;
ein einzelnes Drosselventil (102) zum Regulieren einer Luftmenge, die in die einzelne Verbrennungskammer (202) strömt, durch Drehen um eine Drosselventildrehachse (Ax1), die sich aus der Perspektive der Drosselvorrichtung in einer Links-Rechts-Richtung erstreckt;
einen Drosselventilantriebsmotor (106), der eine Drosselventilantriebsmotordrehwelle (Sh2) mit einer Mittelachse umfasst, welche eine sich aus der Perspektive der Drosselvorrichtung in der Links-Rechts-Richtung erstreckende Drehachse (Ax2) des Drosselventilantriebsmotors (106) ist, wobei der Drosselventilantriebsmotor (106) dazu konfiguriert ist, die Drosselventilantriebsmotordrehwelle (Sh2) um die Drehachse (Ax2) des Drosselventilantriebsmotors (106) zu drehen; und
einen Geschwindigkeitsreduzierungsmechanismus (104), der Folgendes umfasst:
eine Mehrzahl von Getrieberädern (112, 114, 116, 118, 120), die lediglich Geradstirnräder und/oder Schrägstirnräder umfassen; und
ein Geschwindigkeitsreduzierungsmechanismusgehäuse (110), das die Mehrzahl von Getrieberädern (112, 114, 116, 118, 120) aufnimmt und den Drosselventilantriebsmotor (106) trägt,
wobei der Geschwindigkeitsreduzierungsmechanismus (104) dazu konfiguriert ist, das einzelne Drosselventil (102) um die Drosselventildrehachse (Ax1) zu drehen, indem eine Drehung der Drosselventilantriebsmotordrehwelle (Sh2) übertragen wird, während die Drehgeschwindigkeit durch die Mehrzahl von Getrieberädern (112, 114, 116, 118, 120) reduziert wird,
wobei die Drosselvorrichtung (68, 68a, 68b, 68c) (A), (B), (C), (D) und (E) erfüllt:
(A) das einzelne Drosselventil (102) ist rechts von dem Geschwindigkeitsreduzierungsmechanismus (104) angeordnet, wobei rechts aus der Perspektive der Drosselvorrichtung (68, 68a, 68b, 68c) gesehen liegt;
(B) der Drosselventilantriebsmotor (106) ist links von dem Geschwindigkeitsreduzierungsmechanismus (104) angeordnet, wobei links aus der Perspektive der Drosselvorrichtung (68, 68a, 68b, 68c) gesehen liegt;
(C) der Drosselventilantriebsmotor (106) liegt bei Betrachtung in der Links-Richtung aus der Perspektive der Drosselvorrichtung oder in der Rechts-Richtung aus der Perspektive der Drosselvorrichtung innerhalb eines Außenrands des Geschwindigkeitsreduzierungsmechanismusgehäuses (110);
(D) ein Bewegungsbereich des einzelnen Drosselventils (102) liegt bei Betrachtung in der Links-Richtung aus der Perspektive der Drosselvorrichtung oder in der Rechts-Richtung aus der Perspektive der Drosselvorrichtung innerhalb des Außenrands des Geschwindigkeitsreduzierungsmechanismusgehäuses (110);
(E) die Drosselventildrehachse (Ax1) ist bei Betrachtung in der Links-Richtung aus der Perspektive der Drosselvorrichtung oder in der Rechts-Richtung aus der Perspektive der Drosselvorrichtung an einer Position angeordnet, die sich von der Drosselventilantriebsmotorachse (Ax2) unterscheidet, wobei der Drosselventilantriebsmotor (106) bei Betrachtung in der Links-Richtung aus der Perspektive der Drosselvorrichtung oder der Rechts-Richtung aus der Perspektive der Drosselvorrichtung an jeder Position oberhalb von, unterhalb von, vor oder hinter dem Drosselventil (102) angeordnet sein kann.

2. Das Spreizsitzfahrzeug (1) gemäß Anspruch 1, wobei sich die Drehachsen der Mehrzahl von Getrieberädern (112, 114, 116, 118, 120) in der Links-Rechts-Richtung aus der Perspektive der Drosselvorrichtung erstrecken.

3. Das Spreizsitzfahrzeug (1) gemäß einem der Ansprüche 1 bis 2, wobei die Drosselventilantriebsmotordrehachse (Ax2) und die Drosselventildrehachse (Ax1) sich in der Links-Rechts-Richtung aus der Perspektive des Fahrzeugs erstrecken, wenn der Fahrzeugkörperrahmen (60) in einer aufrechten Position ist, und die Drosselventilantriebsmotordrehachse (Ax2) bei Betrachtung in der Abwärtsrichtung aus der Perspektive des Fahrzeugs, wenn der Fahrzeugkörperrahmen (60) in einer aufrechten Position ist, an einer Position angeordnet ist, die sich von der Drosselventildrehachse (Ax1) in der Vorne-Hinten-Richtung aus der Perspektive des Fahrzeugs unterscheidet.

4. Das Grätschsitzfahrzeug (1) gemäß einem der Ansprüche 1 bis 3,
wobei der Drosselventilantriebsmotor (106) ferner einen Drosselventilantriebsmotorrotor (107), der gemeinsam mit der Drosselventilantriebsmotordrehwelle (Sh2) drehbar ist, und ein Drosselventilantriebsmotorgehäuse (105) umfasst, das den Drosselventilantriebsmotorrotor (107) aufnimmt, wobei die Mehrzahl von Getrieberädern (112, 114, 116, 118, 120) ein größtes Getrieberad (114) umfasst, dessen Radius der größte aus der Mehrzahl von Getrieberädern (112, 114, 116, 118, 120) ist, wobei der Radius des größten Getrieberads (114) bei Betrachtung in der Links-Richtung aus der Perspektive der Drosselvorrichtung oder in der Rechts-Richtung aus der Perspektive der Drosselvorrichtung größer ist als der Radius des Bewegungsbereichs des einzelnen Drosselventils (102) und der Radius des Drosselventilantriebsmotorgehäuses (105).

## Revendications

1. Véhicule à selle (1) comprenant:
un châssis de carrosserie de véhicule (60);
un moteur (66) supporté par le châssis de carrosserie de véhicule (60), le moteur (66) étant un moteur monocylindre présentant une chambre de combustion unique (202); et
un dispositif d'étranglement (68, 68a, 68b, 68c),
dans lequel le dispositif d'étranglement (68, 68a, 68b, 68c) comporte:
un corps de papillon (100) faisant partie d'un passage d'admission (200) connecté à la chambre de combustion unique (202);
un soupape d'étranglement unique (102) destinée à réguler une quantité d'air circulant vers la chambre de combustion unique (202) en tournant autour d'un axe de rotation de soupape d'étranglement (Ax1) s'étendant, par rapport au dispositif d'étranglement, dans une direction gauche-droite;
un moteur d'entraînement de soupape d'étranglement (106) comportant un arbre de rotation de moteur d'entraînement de soupape d'étranglement (Sh2) présentant un axe central, qui est un axe de rotation (Ax2) du moteur d'entraînement de soupape d'étranglement (106) s'étendant dans la direction gauche-droite par rapport à la soupape d'étranglement, le moteur d'entraînement de soupape d'étranglement (106) étant configuré pour faire tourner l'arbre de rotation de moteur d'entraînement de soupape d'étranglement (Sh2) autour de l'axe de rotation (Ax2) du moteur d'entraînement de soupape d'étranglement (106); et
un mécanisme de réduction de vitesse (104) comportant:
une pluralité d'engrenages (112, 114, 116, 118, 120) comportant uniquement des engrenages droits et/ou des engrenages hélicoïdaux; et
un carter de mécanisme de réduction de vitesse (110) abritant la pluralité d'engrenages (112, 114, 116, 118, 120) et supportant le moteur d'entraînement de soupape d'étranglement (106),
dans lequel le mécanisme de réduction de vitesse (104) est configuré pour faire tourner le soupape d'étranglement unique (102) autour de l'axe de rotation de soupape d'étranglement (Ax1) en transmettant la rotation de l'arbre de rotation de moteur d'entraînement de soupape d'étranglement (Sh2) tout en réduisant la vitesse de rotation à travers la pluralité d'engrenages (112, 114, 116, 118, 120),
dans lequel le dispositif d'étranglement (68, 68a, 68b, 68c) remplit (A), (B), (C), (D) et (E):
(A) la soupape d'étranglement unique (102) est disposée à droite du mécanisme de réduction de vitesse (104), la droite étant par rapport au dispositif d'étranglement (68, 68a, 68b, 68c);
(B) le moteur d'entraînement de soupape d'étranglement (106) est disposé à gauche du mécanisme de réduction de vitesse (104), la gauche étant par rapport au dispositif d'étranglement (68, 68a, 68b, 68c);
(C) le moteur d'entraînement de soupape d'étranglement (106) se trouve dans les limites d'un bord extérieur du carter de mécanisme de réduction de vitesse (110) lorsque vu dans la direction gauche par rapport au dispositif d'étranglement ou dans la direction à droite par rapport au dispositif d'étranglement;
(D) la plage de déplacement de la soupape d'étranglement unique (102) se trouve dans les limites du bord extérieur du carter de mécanisme de réduction de vitesse (110) lorsque vue dans la direction à gauche par rapport au dispositif d'étranglement ou dans la direction à droite par rapport au dispositif d'étranglement;
(E) l'axe de rotation de soupape d'étranglement (Ax1) est disposé à une position différente de l'axe de rotation de moteur d'entraînement de soupape d'étranglement (Ax2) lorsque vu dans la direction à gauche par rapport au dispositif d'étranglement ou dans la direction à droite par rapport au dispositif d'étranglement, où le moteur d'entraînement de soupape d'étranglement (106) peut être disposé à toute position vers le haut, vers le bas, à l'avant ou à l'arrière de la soupape d'étranglement (102) lorsque vu dans la direction à gauche par rapport au dispositif d'étranglement ou dans la direction à droite par rapport au dispositif d'étranglement.

2. Véhicule à selle (1) selon la revendication 1, dans lequel les axes de rotation de la pluralité d'engrenages (112, 114, 116, 118, 120) s'étendent dans la direction gauche-droite par rapport au dispositif d'étranglement.

3. Véhicule à selle (1) selon l'une quelconque des revendications 1 à 2, dans lequel l'axe de rotation de moteur d'entraînement de soupape d'étranglement (Ax2) et l'axe de rotation de soupape d'étranglement (Ax1) s'étendent dans la direction gauche-droite par rapport au véhicule lorsque le châssis de carrosserie de véhicule (60) se trouve dans une position verticale, et l'axe de rotation de moteur d'entraînement de soupape d'étranglement (Ax2) est disposé dans une position différente de l'axe de rotation de soupape d'étranglement (Ax1) dans la direction avant-arrière par rapport au véhicule lorsque vu dans la direction vers le bas par rapport au véhicule lorsque le châssis de carrosserie de véhicule (60) se trouve dans une position verticale.

4. Véhicule à selle (1) selon l'une quelconque des revendications 1 à 3,
dans lequel le moteur d'entraînement de soupape d'étranglement (106) comporte par ailleurs un rotor de moteur d'entraînement de soupape d'étranglement (107) pouvant tourner ensemble avec l'arbre de rotation de moteur d'entraînement de soupape d'étranglement (Sh2) et un carter de moteur d'entraînement de soupape d'étranglement (105) abritant le rotor de moteur d'entraînement de soupape d'étranglement (107), dans lequel la pluralité d'engrenages (112, 114, 116, 118, 120) comportent un engrenage le plus grand (114) dont le rayon est le plus grand parmi la pluralité d'engrenages (112, 114, 116, 118, 120), le rayon de l'engrenage le plus grand (114) étant plus grand que le rayon de la plage de déplacement de la soupape d'étranglement unique (102) et le rayon du carter de moteur d'entraînement de soupape d'étranglement (105), lorsque vu dans la direction à gauche par rapport au dispositif d'étranglement ou dans la direction à droite par rapport au dispositif d'étranglement.
